(19) Europäisches Patentamt / European Patent Office / Office européen des brevets

(11) **EP 4 596 105 A1**

(12) **EUROPEAN PATENT APPLICATION**
published in accordance with Art. 153(4) EPC

(43) Date of publication:
06.08.2025 Bulletin 2025/32

(21) Application number: 23872486.8

(22) Date of filing: 27.09.2023

(51) International Patent Classification (IPC):
*B01J 29/44* (2006.01)   *B01J 29/85* (2006.01)
*C10G 3/00* (2006.01)   *C11B 1/06* (2006.01)

(52) Cooperative Patent Classification (CPC):
**B01J 29/44; B01J 29/85; C10G 3/00; C11B 1/06;**
Y02P 30/20

(86) International application number:
**PCT/JP2023/035302**

(87) International publication number:
**WO 2024/071264 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.09.2022 JP 2022154279

(71) Applicants:
• **National University Corporation
Tokyo University Of Agriculture and Technology
Fuchu-shi
Tokyo 183-8538 (JP)**

• **Green Power Development Corporation of Japan
Tokyo 101-0003 (JP)**

(72) Inventor: **QIAN, Eika
Fuchu-shi, Tokyo 183-8538 (JP)**

(74) Representative: **Murgitroyd & Company
165-169 Scotland Street
Glasgow G5 8PL (GB)**

(54) **BIO JET FUEL PRODUCTION CATALYST, AND METHOD FOR PRODUCING BIO JET FUEL USING BIO JET FUEL PRODUCTION CATALYST**

(57)    To provide a catalyst for producing a bio-jet fuel, which is to be used in a method of producing a bio-jet fuel, the method having a high energy-saving property and enabling easy production of a high-quality bio-jet fuel, a catalyst for producing a bio-jet fuel, which is to be used in a method of producing a bio-jet fuel, the method including reforming a biomass-derived oil containing a triacylglycerol to produce a bio-jet fuel, includes a solid acid catalyst and a solid base catalyst supported thereon, uses a zeolite as the solid acid catalyst, uses a Group 2 metal oxide as the solid base catalyst, and further includes a noble metal supported thereon.

EP 4 596 105 A1

**Description**

Technical Field

The present invention relates to a catalyst for producing a bio-jet fuel, for reforming a bio-oil derived from a biomass to provide a bio-jet fuel, and to a method of producing a bio-jet fuel using a catalyst for producing a bio-jet fuel.

Background Art

In recent years, global warming caused by carbon dioxide has become an international environmental issue. With regard to this issue, reduction of greenhouse gases in each country has been required by, for example, a Framework Convention on Climate Change or the Kyoto Protocol. A carbon dioxide emission amount in Japan in fiscal 2018 was 1.138 billion tons, accounting for 3.4% of a carbon dioxide emission amount in the world. Accordingly, it can hardly be said that sufficient reduction of greenhouse gases required by the convention has been able to be achieved. An amount of carbon dioxide emitted at the time of energy conversion accounts for a ratio as high as 40.1% of the carbon dioxide emission amount. Accordingly, to achieve a sustainable society, a change from the conventional production of energy and chemical products mainly using a fossil resource to technological development that enables production of a clean and renewable resource has been required.

Under such circumstances, a biofuel has been paid attention to as an alternative product to a fossil fuel that can achieve carbon neutrality from the viewpoint of suppressing carbon dioxide emission. With regard to the biofuel, carbon dioxide emitted by its combustion is derived from carbon dioxide absorbed from the atmosphere in a growth process of a biomass. Accordingly, even in the case where the biofuel is used, carbon neutrality, which is a concept that an emission amount of carbon dioxide and an absorption amount of carbon dioxide are the same when production or a biological activity is performed, can be achieved.

As such biofuel that achieves carbon neutrality, there is a bio-jet fuel in addition to a bioethanol fuel and a biodiesel fuel that have been widely spread in recent years. The spread of the bio-jet fuel is in a slow state as compared to that of the bioethanol fuel or the biodiesel fuel because of its strict production standard or the like. However, about 1.5 billion barrels to about 1.7 billion barrels (238 $Mm^3$ to 270 $Mm^3$ equivalent) of a typical jet fuel is annually consumed in the aviation industry in the world, and hence rapid development of a high-quality bio-jet fuel as a substitute for the typical jet fuel has been required.

A method of producing a bio-jet fuel from a biomass resource has heretofore been performed by: subjecting a biomass-derived raw material oil to hydrodeoxygenation treatment to generate a hydrocarbon; and subjecting the hydrocarbon to isomerization and decomposition to generate a $C_{7-16}$ isomerized hydrocarbon serving as a bio-jet fuel.

As a method of producing such bio-jet fuel, for example, in Patent Literature 1, there is a disclosure of a method of producing a diesel fuel boiling range product and an aviation fuel boiling range product from a renewable feedstock, the method including: (a) subjecting a renewable feedstock to treatment by hydrogenation and deoxidation in a first reaction zone using a catalyst under such a reaction condition that hydrogen is present to provide a product stream of the first reaction zone including a hydrocarbon fraction containing hydrogen, water, carbon monoxide, carbon dioxide, a paraffin in a diesel fuel boiling range, and a paraffin in an aviation fuel boiling range; (b) selectively separating a gas stream containing at least part of hydrogen, water, carbon monoxide, and carbon dioxide from the product stream of the first reaction zone from a residual stream containing at least the paraffin in a high-temperature and high-pressure hydrogen stripper; (c) introducing the residual stream into a second reaction zone under isomerization and selective cracking conditions so that the stream may be brought into contact with an isomerization and selective hydrocracking catalyst, followed by selective hydrocracking of at least part of the paraffin and isomerization of at least part of the paraffin to generate a stream containing a large amount of a branched paraffin; (d) cooling the stream containing a large amount of the branched paraffin and the gas stream to separate a gas component containing at least hydrogen and carbon dioxide from a liquid hydrocarbon component and a water component; and (e) separating the liquid hydrocarbon component to an overhead stream, a diesel fuel boiling range product, and an aviation fuel boiling range product.

In Patent Literature 2, there is a disclosure of a method of generating a hydrocarbon, including: a first stage of providing a condition, which is sufficient for subjecting an oil of biological origin and a hydrogen gas to hydrodeoxygenation in the presence of a hydrodeoxygenation catalyst, to generate a n-paraffin; a second stage of providing a condition, which is sufficient for subjecting the n-paraffin and the hydrogen gas to isomerization in the presence of an isomerization catalyst, to generate an isoparaffin and a separated fraction; and a second stage of recirculating a fraction that boils at 200°C or more under the atmospheric pressure obtained between the second stage and reisomerization to perform isomerization in the presence of the isomerization catalyst.

In Patent Literature 3, there is a disclosure of a method of converting a triacylglyceride-containing oil into a crude oil precursor and/or a distilled hydrocarbon fuel, the method including the following operations: subjecting a mixture of the triacylglyceride-containing oil, water, and diatomic hydrogen to a reaction at a temperature in the range of from about 250°C to about 560°C and at a pressure of more than about 75 bar to convert at least part of a triacylglyceride, followed by the recovery of a reaction effluent containing water and one or more kinds of an isoolefin, an isoparaffin, a cycloolefin, a cycloparaffin, and aromatic compounds; and subjecting the reaction effluent to hydrogen treatment to form a hydrogentreated effluent.

Citation List

Patent Literature

[PTL 1] JP 2011-515539 A
[PTL 2] JP 2011-526640 A
[PTL 3] JP 2015-531430 A

Summary of Invention

Technical Problem

Each of the methods as described in Patent Literatures 1 and 2 involves a two-stage process including a hydrodeoxygenation treatment step and an isomerization decomposition step. Accordingly, there is a problem in that large energy is consumed, and high cost is required in the production of a bio-jet fuel.

In the method of Patent Literature 3, a facility that withstands high pressure and a large amount of hydrogen are required because an oil and fat is subjected to hydrothermal treatment under a high pressure of more than about 75 bar, followed by a hydrogenation reaction. Accordingly, there is a problem in that large energy is consumed, and high cost is required in the production of a bio-jet fuel.

In addition, in the hydrodeoxygenation reaction of each of Patent Literatures 1 and 2, carbon monoxide or a hydrocarbon having a short carbon chain is generated as a byproduct, the carbon monoxide or the hydrocarbon having a short carbon chain serving as the byproduct reacts with hydrogen, and hence the consumption amount of hydrogen becomes larger. Accordingly, there occurs a problem such as an increase in cost.

In order to solve the above-mentioned problems, the inventor of the present application has focused on a multifunctional catalyst, and has achieved the invention of the present application including: a catalyst capable of performing a hydrodeoxygenation reaction, hydroisomerization, and hydrocracking as a one-step reaction to enable a method of producing a bio-jet fuel under low hydrogen pressure and with low hydrogen consumption to be performed; and a method of producing a bio-jet fuel using the catalyst.

The present invention is directed to provide: a catalyst for producing a bio-jet fuel, which is to be used in a method of producing a bio-jet fuel, the method having a high energy-saving property and enabling easy production of a high-quality bio-jet fuel; and a method of producing a bio-jet fuel using the catalyst.

Solution to Problem

In order to solve the above-mentioned problems, according to the invention of the present application, there is provided a catalyst for producing a bio-jet fuel, which is to be used in a method of producing a bio-jet fuel, the method including reforming a biomass-derived oil containing a triacylglycerol to produce a bio-jet fuel, the catalyst including a solid acid catalyst and a solid base catalyst supported thereon, wherein the catalyst for producing a bio-jet fuel uses a zeolite as the solid acid catalyst, uses a Group 2 metal oxide as the solid base catalyst, and further includes a noble metal supported thereon.

The catalyst for producing a bio-jet fuel of the invention of the present application may further include tin supported thereon.

Platinum may be used as the noble metal to be supported on the catalyst for producing a bio-jet fuel of the invention of the present application.

In the catalyst for producing a bio-jet fuel of the invention of the present application, the zeolite serving as the solid acid catalyst may be ZSM-5-type zeolite or SAPO-11-type zeolite.

The Group 2 metal oxide to be used in the catalyst for producing a bio-jet fuel of the invention of the present application may be one kind or two or more kinds selected from magnesium oxide, calcium oxide, and barium oxide.

The biomass-derived oil to be reformed with the catalyst for producing a bio-jet fuel of the invention of the present application may be coconut oil.

Advantageous Effects of Invention

According to the invention of the present application, a $C_{7-16}$ isomerized hydrocarbon serving as a bio-jet fuel can be suitably obtained from a biomass-derived oil containing a free fatty acid and a triacylglycerol.

Brief Description of Drawings

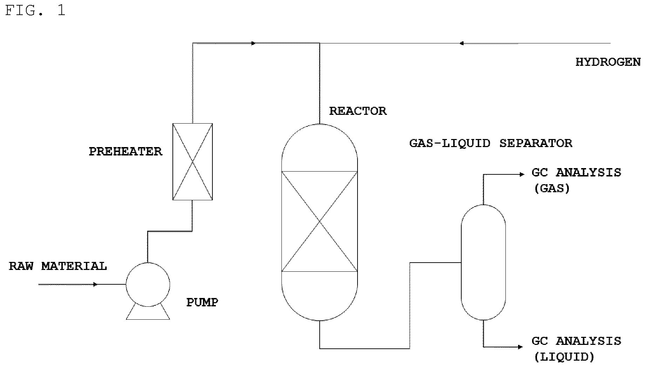

FIG. 1 is an explanatory view for illustrating performance test equipment for a catalyst for producing a bio-jet fuel according to the present invention.

Description of Embodiments

An example of an embodiment of the invention of the present application is described below.

A catalyst for producing a bio-jet fuel in this example is a catalyst for producing a bio-jet fuel including a zeolite serving as a solid acid catalyst and a Group 2 metal oxide serving as a solid base catalyst supported thereon, and further including a noble metal supported thereon.

The catalyst for producing a bio-jet fuel in this example may further include tin supported thereon.

Gold, platinum, ruthenium, rhodium, osmium, iridium, palladium, or rhenium may be used as the noble metal to be supported, and platinum is suitably used.

For example, mordenite, β-zeolite, ZSM-based zeolite, A-type zeolite, X-type zeolite, or Y-type zeolite may be used as the zeolite to be used as the solid acid catalyst, and ZSM-5-type zeolite or SAPO-11-type zeolite is suitably used.

The Group 2 metal oxide to be used as the solid base catalyst is not particularly limited, but one kind or two or more kinds selected from magnesium oxide, calcium oxide, rubidium oxide, and barium oxide is suitably used.

The catalyst is produced as follows: a solid base catalyst precursor is dissolved in distilled water; the solution is impregnated into the solid acid catalyst; and the resultant is dried, molded into a pellet shape, and then fired to provide a catalyst. In addition, the catalyst is produced as follows: a salt of the noble metal is dissolved in distilled water; a salt of tin is further added thereto in some cases; the solution is impregnated; and the resultant is dried and fired to provide a catalyst. The method of producing the catalyst is not limited to this method, and the catalyst may be produced by any other method.

A biomass-derived oil containing a triacylglycerol to be reformed with the catalyst for producing a bio-jet fuel according to the invention of the present application is not particularly limited, but, in order to stably supply and easily produce the oil, a plant seed containing a large amount of an oil and fat is suitably used as a biomass. Suitable examples thereof include bintaro, bengkoang, polon, jatropha, coconut, palm fruit, and date fruit. Of those, coconut is more suitably used because its endosperm contains a large amount of an oil content. A method of producing the oil from the biomass is not particularly limited, and the production is performed by, for example, oil extraction or heating treatment.

The reforming of the biomass-derived oil is performed with a reforming treatment apparatus including a reaction vessel, heating means, and gas injection means that can inject a hydrogen gas. A continuous production apparatus, which can continuously perform the supply of the biomass-derived oil serving as a raw material and the take-out of a product, such as an oil or a gas, after reforming treatment, is preferably used as the reforming treatment apparatus.

As an example of a method of producing a bio-jet fuel, which includes reforming a biomass-derived oil, first, pretreatment of subjecting the catalyst for producing a bio-jet fuel to hydrogenation reduction is performed. A method for the hydrogenation reduction is not particularly limited, but is suitably performed at 400°C for about 3 hours under a hydrogen flow rate of 100 ml/min. After the reduction, reforming treatment of the biomass-derived oil including: accommodating the biomass-derived oil and the catalyst in the reaction vessel of the reforming treatment apparatus; and injecting a hydrogen gas into the reaction vessel at a reaction temperature of from 200°C to 450°C to perform a hydrodeoxygenation reaction, hydroisomerization, and hydrocracking as a one-step reaction is performed. A hydrogen pressure may be a low pressure, and is from about 0.5 MPa to about 3 MPa, and the treatment is performed at a hydrogen supply amount of from about 100:1 to about 1,200:1 in terms of volume ratio between hydrogen and the biomass-derived oil. In addition, in the case of the continuous production apparatus, a liquid hourly space velocity is suitably set to from about 5 $h^{-1}$ to about 0.2 $h^{-1}$.

According to the catalyst for producing a bio-jet fuel in this example as described above, the hydrodeoxygenation reaction, the hydroisomerization, and the hydrocracking can be performed as a one-step reaction, and hence the method of producing a bio-jet fuel under low hydrogen pressure and with low hydrogen consumption as compared to the related-art method of producing a bio-jet fuel can be used.

Examples

The invention of the present application is described in more detail below by way of Examples.

<Example 1>

A catalyst using ZSM-5-type zeolite as a solid acid catalyst, including 1 mass% of magnesium oxide serving as a solid base catalyst supported thereon, and further including 0.3 mass% of platinum supported thereon was produced by using the above-mentioned method of producing a catalyst.

<Example 2>

A catalyst using ZSM-5-type zeolite as a solid acid catalyst, including 1 mass% of magnesium oxide serving as a solid base catalyst supported thereon, and further including 0.3 mass% of platinum and 0.37 mass% of tin supported thereon was produced by using the above-mentioned method of producing a catalyst.

<Example 3>

A catalyst using SAPO-11-type zeolite as a solid acid catalyst, including 1 mass% of magnesium oxide serving as a solid base catalyst supported thereon, and further including 0.3 mass% of platinum and 0.37 mass% of tin supported thereon was produced by using the above-mentioned method of producing a catalyst.

<Example 4>

A catalyst using ZSM-5-type zeolite as a solid acid catalyst, including 5 mass% of magnesium oxide serving as a solid base catalyst supported thereon, and further including 0.3 mass% of platinum and 0.37 mass% of tin supported thereon was produced by using the above-mentioned method of producing a catalyst.

<Example 5>

A catalyst using SAPO-11-type zeolite as a solid acid catalyst, including 5 mass% of magnesium oxide as a solid base catalyst supported thereon, and further including 0.3 mass% of platinum and 0.37 mass% of tin supported thereon was produced by using the above-mentioned method of producing a catalyst.

<Test 1>

In Test 1, a reforming test of coconut oil was performed with each of the catalysts of Example 1 and Example 2. In the test, a fixed-bed flow-type reaction apparatus illustrated in FIG. 1 for continuously supplying coconut oil to a reaction furnace, and continuously discharging a liquid product and a gas product reformed in the reaction furnace was used. The catalyst was subjected to hydrogenation reduction as pretreatment at 400°C for 3 hours under a hydrogen flow rate of 100 ml/min. Test conditions were as follows: a reaction temperature was changed between 350°C, 375°C, and 400°C in a stepwise manner; a hydrogen pressure was set to 3 MPa; a hydrogen supply amount was set to a volume 1,000 times as large as that of the raw material; and a liquid hourly space velocity was set to 2 h$^{-1}$.

The liquid product obtained by the above-mentioned test was analyzed, and values of a raw material conversion rate, a yield of a hydrocarbon ($C_7$-$C_{16}$) for a bio-jet fuel, and a hydrocarbon isomerization rate were calculated. The term "raw material conversion rate" refers to a rate at which a triglyceride in coconut oil serving as a raw material is converted into a hydrocarbon by reforming, and the rate is determined by the equation 1. In addition, the yield of a hydrocarbon ($C_7$-$C_{16}$) for a bio-jet fuel and the hydrocarbon isomerization rate are determined by the equation 2 and the equation 3, respectively. For the hydrocarbon isomerization rate, the total amount of isomerized hydrocarbons in the liquid product is calculated on the assumption that the hydrocarbon that has not been identified by the analysis is the isomerized hydrocarbon.

[Math. 1]

$$x_{Feed} \,[\mathrm{mol\%}] = \left(1 - \frac{\text{Amount of unreacted triglyceride in liquid product } [\mathrm{mol}]}{\text{Amount of triglyceride in raw material } [\mathrm{mol}]}\right) \times 100$$

[Math. 2]

$$Y_{C_7-C_{16}}[Cmol\%] = \left(1 - \frac{\text{Amount of triglyceride in liquid product } [Cmol]}{\text{Amount of triglyceride in raw material } [Cmol]}\right)$$
$$\times \frac{\text{Amount of } C_7-C_{16} \text{ hydrocarbon in liquid product } [Cmol]}{\text{Total product generation amount } [Cmol]} \times 100$$

[Math. 3]

$$S_{iso}[Cmol\%] = \frac{\text{Total amount of isomerized hydrocarbons in liquid product } [Cmol]}{\text{Total amount of hydrocarbons in liquid product } [Cmol]} \times 100$$

The results of the above-mentioned test are shown in Table 1.

Table 1

| Catalyst | Reaction temperature $T_r$ [°C] | Raw material conversion rate $X_{feed}$ [mol%] | Hydrocarbon isomerization rate $S_{iso}$ [Cmol%] | Yield of hydrocarbon ($C_{7-16}$) $Y_{C7-16}$ [Cmol%] |
|---|---|---|---|---|
| Example 1 Pt/MgO / ZSM-5 | 350 | 94.14 | 72.65 | 40.91 |
| | 375 | 99.83 | 85.69 | 42.67 |
| | 400 | 99.97 | 85.72 | 31.09 |
| Example 2 PtSn/MgO (1) /ZSM-5 | 350 | 99.99 | 69.69 | 43.25 |
| | 375 | 99.99 | 81.22 | 35.26 |
| | 400 | 99.99 | 81.33 | 35.99 |

As shown in Table 1, in the liquid products reformed with the catalysts of Example 1 and Example 2, sufficient numerical values were recognized for the raw material conversion rate, the yield of a hydrocarbon ($C_7$-$C_{16}$) for a bio-jet fuel, and the hydrocarbon isomerization rate. Thus, it was shown that, when each of the catalysts of Example 1 and Example 2 was used, the hydrodeoxygenation reaction, the hydroisomerization, and the hydrocracking were able to be performed as a one-step reaction, and hence the method of producing a bio-jet fuel under low hydrogen pressure and with low hydrogen consumption as compared to the related-art method of producing a bio-jet fuel was able to be suitably performed.

<Test 2>

Test 2 was performed under the same conditions as those of Test 1 except that: the catalysts of Examples 2 to 5 were used; and the hydrogen pressure was set to 1 MPa, and evaluation was performed in the same manner as in Test 1. The results are shown in Table 2.

Table 2

| Catalyst | Reaction temperature $T_r$ [°C] | Raw material conversion rate $X_{feed}$ [mol%] | Hydrocarbon isomerization rate $S_{iso}$ [Cmol%] | Yield of hydrocarbon ($C_{7-16}$) $Y_{C7-16}$ [Cmol%] |
|---|---|---|---|---|
| Example 2 PtSn/MgO (1) /ZSM-5 | 350 | 99.99 | 82.30 | 20.24 |
| | 375 | 99.99 | 77.06 | 26.54 |
| | 400 | 99.99 | 72.04 | 23.03 |

(continued)

| Catalyst | Reaction temperature $T_r$ [°C] | Raw material conversion rate $X_{feed}$ [mol%] | Hydrocarbon isomerization rate $S_{iso}$ [Cmol%] | Yield of hydrocarbon ($C_{7}$-$_{16}$) $Y_{C7-16}$ [Cmol%] |
|---|---|---|---|---|
| Example 3 PtSn/MgO (1) /SAPO-11 | 350 | 92.47 | 74.42 | 11.02 |
| | 375 | 99.90 | 57.75 | 39.99 |
| | 400 | 99.99 | 35.96 | 73.62 |
| Example 4 PtSn/MgO (5) / ZSM-5 | 350 | 99.99 | 77.39 | 11.71 |
| | 375 | 99.99 | 72.67 | 21.37 |
| | 400 | 99.99 | 70.24 | 18.46 |
| Example 5 PtSn/MgO(5) / SAPO-11 | 350 | 75.64 | 0.42 | 3.30 |
| | 375 | 99.66 | 3.88 | 16.28 |
| | 400 | 100.00 | 11.46 | 54.87 |

As shown in Table 2, in the liquid products reformed with the catalysts of Examples 2 to 4, sufficient numerical values were recognized for the raw material conversion rate, the yield of a hydrocarbon ($C_7$-$C_{16}$) for a bio-jet fuel, and the hydrocarbon isomerization rate. Thus, it was shown that, when each of the catalysts of Examples 2 to 4 was used, the hydrodeoxygenation reaction, the hydroisomerization, and the hydrocracking were able to be performed as a one-step reaction, and hence the method of producing a bio-jet fuel under extremely low hydrogen pressure and with extremely low hydrogen consumption as compared to the related-art method of producing a bio-jet fuel was able to be suitably performed. In the liquid product reformed with the catalyst of Example 5, the yield of a hydrocarbon ($C_7$-$C_{16}$) for a bio-jet fuel and the hydrocarbon isomerization rate were slightly lower than those of the liquid product reformed with each of the catalysts of Examples 2 to 4, but a high numerical value was recognized for the raw material conversion rate in the same manner as in Examples 2 to 4. Thus, it was shown that, when the catalyst of Example 5 was used, the hydrodeoxygenation reaction, the hydroisomerization, and the hydrocracking were able to be performed as a one-step reaction, and hence the method of producing a bio-jet fuel under extremely low hydrogen pressure and with extremely low hydrogen consumption as compared to the related-art method of producing a bio-jet fuel was able to be suitably performed.

**Claims**

1. A catalyst for producing a bio-jet fuel, which is to be used in a method of producing a bio-jet fuel, the method including reforming a biomass-derived oil containing a triacylglycerol to produce a bio-jet fuel,

   the catalyst comprising a solid acid catalyst and a solid base catalyst supported thereon,
   wherein the catalyst for producing a bio-jet fuel uses a zeolite as the solid acid catalyst, uses a Group 2 metal oxide as the solid base catalyst, and further comprises a noble metal supported thereon.

2. The catalyst for producing a bio-jet fuel according to claim 1, wherein the catalyst for producing a bio-jet fuel further comprises tin supported thereon.

3. The catalyst for producing a bio-jet fuel according to claim 1 or **2,** wherein the noble metal is platinum.

4. The catalyst for producing a bio-jet fuel according to claim 1 or 2, wherein the zeolite serving as the solid acid catalyst is ZSM-5-type zeolite or SAPO-11-type zeolite.

5. The catalyst for producing a bio-jet fuel according to claim 1 or **2,** wherein the Group 2 metal oxide serving as the solid acid catalyst is one kind or two or more kinds selected from magnesium oxide, calcium oxide, and barium oxide.

6. The catalyst for producing a bio-jet fuel according to claim 3, wherein the zeolite serving as the solid acid catalyst is ZSM-5-type zeolite or SAPO-11-type zeolite.

7. The catalyst for producing a bio-jet fuel according to claim 4, wherein the Group 2 metal oxide serving as the solid acid catalyst is one kind or two or more kinds selected from magnesium oxide, calcium oxide, and barium oxide.

8. The catalyst for producing a bio-jet fuel according to claim 5, wherein the Group 2 metal oxide serving as the solid acid catalyst is one kind or two or more kinds selected from magnesium oxide, calcium oxide, and barium oxide.

9. The catalyst for producing a bio-jet fuel according to claim 1 or 2, wherein the biomass-derived oil is coconut oil extracted from coconut.

10. A method of producing a bio-jet fuel, the method comprising, through use of a reaction apparatus configured to continuously supply a biomass-derived oil containing a triacylglycerol to a reaction furnace, and to continuously discharge a liquid product and a gas product that have been reformed in the reaction furnace, accommodating the biomass-derived oil and a catalyst for producing a bio-jet fuel in the reaction furnace, heating the reaction furnace at a reaction temperature, and injecting a hydrogen gas into the reaction furnace to perform a hydrodeoxygenation reaction, hydroisomerization, and hydrocracking as a one-step reaction, to thereby produce a bio-jet fuel,

wherein the catalyst for producing a bio-jet fuel is a catalyst for producing a bio-jet fuel that includes a solid acid catalyst and a solid base catalyst supported thereon, uses a zeolite as the solid acid catalyst, uses a Group 2 metal oxide as the solid base catalyst, and further includes a noble metal supported thereon,
wherein the reaction temperature is from 200°C to 450°C, and
wherein a hydrogen pressure at which the hydrogen gas is injected is from 0.5 MPa to 3 MPa.

FIG. 1

## INTERNATIONAL SEARCH REPORT

| International application No. |
|---|
| **PCT/JP2023/035302** |

**A. CLASSIFICATION OF SUBJECT MATTER**

***B01J 29/44***(2006.01)i; ***B01J 29/85***(2006.01)i; ***C10G 3/00***(2006.01)i; ***C11B 1/06***(2006.01)i
FI:    B01J29/44 M; B01J29/85 M; C11B1/06; C10G3/00 Z

According to International Patent Classification (IPC) or to both national classification and IPC

**B. FIELDS SEARCHED**

Minimum documentation searched (classification system followed by classification symbols)

B01J21/00-38/74; C10G3/00; C11B1/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-70022 A (TOKYO INST TECH) 06 May 2021 (2021-05-06) claims, paragraphs [0002]-[0004], [0008], [0017], [0025], [0033], examples 1-7 | 1-9 |
| A | | 10 |
| Y | WO 2019/221287 A1 (HIBD LABORATORY ASSOCIATION) 21 November 2019 (2019-11-21) claim 1, paragraphs [0005], [0009] | 1-9 |
| Y | WO 2022/051576 A1 (CHEVRON U.S.A. INC.) 10 March 2022 (2022-03-10) claims 1-6, paragraphs [0005], [0018], example 1 | 2 |
| Y | CN 103100413 A (CHINA PETROLEUM & CHEMICAL CORPORATION) 15 May 2013 (2013-05-15) claims 1, 6, 7, paragraphs [0002], [0030]-[0031] | 2 |
| A | US 2015/0203417 A1 (DAILAN INSTITUTE OF CHEMICAL PHYSICS CHINESE ACADEMY OF SCIENCES) 23 July 2015 (2015-07-23) entire text | 1-10 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 596 105 A1

## INTERNATIONAL SEARCH REPORT

| | International application No. |
|---|---|
| | **PCT/JP2023/035302** |

### C. DOCUMENTS CONSIDERED TO BE RELEVANT

| Category* | Citation of document, with indication, where appropriate, of the relevant passages | Relevant to claim No. |
|---|---|---|
| A | JP 2013-535521 A (CHEVRON U.S.A. INC.) 12 September 2013 (2013-09-12) claim 1, examples | 1-10 |
| P, X | WO 2023/085337 A1 (NATIONAL UNIV CORPORATION TOKYO UNIV OF AGRICULTURE AND TECHNOLOGY) 19 May 2023 (2023-05-19) claims, paragraphs [0061]-[0113] | 1-10 |

Form PCT/ISA/210 (second sheet) (January 2015)

11

## INTERNATIONAL SEARCH REPORT
### Information on patent family members

International application No.

**PCT/JP2023/035302**

| Patent document cited in search report | | | Publication date (day/month/year) | Patent family member(s) | | | Publication date (day/month/year) |
|---|---|---|---|---|---|---|---|
| JP | 2021-70022 | A | 06 May 2021 | (Family: none) | | | |
| WO | 2019/221287 | A1 | 21 November 2019 | US | 2021/0171844 | A1 | |
| | | | | claims 1, paragraphs [0020]-[0025], [0036]-[0037] | | | |
| | | | | EP | 3795657 | A1 | |
| | | | | KR | 10-2020-0141087 | A | |
| | | | | CN | 112189046 | A | |
| WO | 2022/051576 | A1 | 10 March 2022 | EP | 4208523 | A1 | |
| | | | | CN | 116323871 | A | |
| | | | | KR | 10-2023-0058436 | A | |
| | | | | JP | 2023-540523 | A | |
| CN | 103100413 | A | 15 May 2013 | (Family: none) | | | |
| US | 2015/0203417 | A1 | 23 July 2015 | WO | 2013/123678 | A1 | |
| | | | | EP | 2817275 | A1 | |
| | | | | CN | 103289824 | A | |
| JP | 2013-535521 | A | 12 September 2013 | WO | 2012/005980 | A2 | |
| | | | | claim 1, examples | | | |
| | | | | US | 2011/0315597 | A1 | |
| | | | | EP | 2588576 | A2 | |
| | | | | CN | 102869753 | A | |
| | | | | KR | 10-2013-0135224 | A | |
| WO | 2023/085337 | A1 | 19 May 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011515539 A
- JP 2011526640 A
- JP 2015531430 A